# EUROPÄISCHE PATENTANMELDUNG

(11) **EP 4 385 675 A1**
(43) Veröffentlichungstag der Anmeldung: **19.06.2024**
(21) Anmeldenummer: 23216840.1
(22) Anmeldetag: 14.12.2023
(51) Int. Cl.: B25J 9/00, B25J 9/16, B25J 19/02, B25J 13/08, G05B 19/402

(54) **VERFAHREN ZUR POSITIONIERUNG EINES ERSTEN BAUTEILS RELATIV ZU EINEM ZWEITEN BAUTEIL DURCH EIN ROBOTERARMSYSTEM**

(30) Priorität: 15.12.2022 DE 102022213715
(71) Anmelder: PERI SE, 89264 Weißenhorn (DE)
(72) Erfinder: SCHMID, Alexander, 89264 Weißenhorn (DE); STROBEL, Wolfgang, 89264 Weißenhorn (DE)
(74) Vertreter: Müller Schupfner & Partner Patent- und Rechtsanwaltspartnerschaft mbB (Muc)

(57) **Zusammenfassung**

Die Erfindung betrifft ein Verfahren zur Positionierung eines ersten Bauteils relativ zu einem zweiten Bauteil durch ein Roboterarmsystem, umfassend: Bereitstellen zumindest eines ersten Roboterarms, der eingerichtet ist, um ein erstes Bauteil zu halten und relativ zu einem zweiten Bauteil zu bewegen, wobei der Roboterarm weiterhin eingerichtet ist, koordinatenbasiert bewegt zu werden; Bereitstellen zumindest einer Laserscaneinheit, die eingerichtet ist, um einen Abstand zwischen dem ersten Bauteil und dem zweiten Bauteil zu erfassen; Aufnehmen des ersten Bauteils durch den ersten Roboterarm und bewegen des ersten Bauteils relativ zum zweiten Bauteil gemäß einer koordinatenbasiert errechneten Position; Erfassen eines Abstandes des ersten Bauteils in seiner koordinatenbasiert errechneten Position zum zweiten Bauteil durch die Laserscaneinheit; Bereitstellen eines Positions-Korrekturwerts basierend auf dem erfassten Abstand des ersten Bauteils zum zweiten Bauteil; Bewegen wenigstens eines der Bauteile basierend auf dem bereitgestellten Positions-Korrekturwert in eine Endposition.

## Beschreibung

### GEBIET DER ERFINDUNG

Die vorliegende Erfindung betrifft ein Verfahren zur Positionierung eines ersten Bauteils relativ zu einem zweiten Bauteil durch ein Roboterarmsystem. Ferner betrifft die vorliegende Erfindung ein Roboterarmsystem zur Positionierung eines ersten Bauteils relativ zu einem zweiten Bauteil, ein korrespondierendes Computerprogrammelement, eine Verwendung und einen Stahlrahmen.

### HINTERGRUND

Roboter finden in der Industrie in vielen unterschiedlichen Bereichen Anwendung, wie beispielsweise in der Automobilindustrie, in der Luft- und Raumfahrtindustrie, in der Elektroindustrie, beim Maschinen- und Anlagenbau, in der Metallindustrie, in der Feinmechanik sowie in anderen Bereichen. In all diesen Bereichen spielt beim Positionieren zweier Bauteile zueinander das Einhalten vorbestimmter Maße und Toleranzen eine wichtige Rolle. Bei nicht Einhalten von Toleranzen kann ein vollständiger Verfahrensschritt in der Herstellung oder das ganze Produkt hinfällig sein.

Es hat sich herausgestellt, dass ein Bedarf besteht, ein Verfahren bereitzustellen, um zwei Bauteile relativ zueinander zu positionieren.

Es ist Aufgabe der vorliegenden Erfindung, ein Verfahren zur Positionierung eines ersten Bauteils relativ zu einem zweiten Bauteil durch ein Roboterarmsystem bereitzustellen. Ferner ist es Aufgabe der vorliegenden Erfindung, ein Roboterarmsystem zur Positionierung eines ersten Bauteils relativ zu einem zweiten Bauteil, ein Computerprogrammelement, eine Verwendung und einen Stahlrahmen bereitzustellen.

Diese und andere Aufgaben, die beim Lesen der folgenden Beschreibung noch genannt werden oder von der Fachperson erkannt werden können, werden durch den Gegenstand der unabhängigen Ansprüche gelöst. Die abhängigen Ansprüche bilden den zentralen Gedanken der vorliegenden Erfindung in besonders vorteilhafterweise weiter.

### Zusammenfassung der Erfindung

Ein erster Aspekt der Erfindung betrifft ein Verfahren zur Positionierung eines ersten Bauteils relativ zu einem zweiten Bauteil durch ein Roboterarmsystem, umfassend: Bereitstellen zumindest eines ersten Roboterarms, der eingerichtet ist, um ein erstes Bauteil zu halten und relativ zu einem zweiten Bauteil zu bewegen, wobei der Roboterarm weiterhin eingerichtet ist, koordinatenbasiert bewegt zu werden; Bereitstellen zumindest einer Laserscaneinheit, die eingerichtet ist, um einen Abstand zwischen dem ersten Bauteil und dem zweiten Bauteil zu erfassen; Aufnehmen des ersten Bauteils durch den ersten Roboterarm und bewegen des ersten Bauteils relativ zum zweiten Bauteil gemäß einer koordinatenbasiert errechneten Position; Erfassen eines Abstandes des ersten Bauteils in seiner koordinatenbasiert errechneten Position zum zweiten Bauteil durch die Laserscaneinheit; Bereitstellen eines Positions-Korrekturwerts basierend auf dem erfassten Abstand des ersten Bauteils zum zweiten Bauteil; Bewegen wenigstens eines der Bauteile basierend auf dem bereitgestellten Positions-Korrekturwert in eine Endposition.

Das Verfahren umfasst das Positionieren eines ersten Bauteils relativ zu einem zweiten Bauteil. Das erste und zweite Bauteil sind beispielsweise Gerüstbauteile oder Schalungsbauteile. Andere Arten von Bauteilen und/oder Komponenten, die relativ zueinander positioniert werden müssen, sind möglich. Beispielsweise sind Karosseriebauteile eines Fahrzeugs ebenfalls als Bauteile denkbar.

Das Roboterarmsystem umfasst wenigstens den ersten Roboterarm. Der erste Roboterarm ist dem ersten Bauteil zugeordnet. Das bedeutet, dass der erste Roboterarm dazu eingerichtet ist, das erste Bauteil zu halten bzw. zu manipulieren. Der Roboterarm ist ferner dazu eingerichtet, koordinatenbasiert relativ zum zweiten Bauteil bewegt zu werden. Darunter ist zu verstehen, dass die Werkzeugposition des Roboterarms anhand eines Referenzpunktes und/oder einer Referenzebene, eines sogenannten Tools Center Points, beschrieben wird bzw. beschrieben werden kann.

Das erste Bauteil wird zum Positionieren von dem ersten Roboterarm aufgenommen und gehalten. Anschließend wird das erste Bauteil relativ zum zweiten Bauteil bewegt. Die Bewegung des ersten Bauteils erfolgt gemäß einer koordinatenbasiert errechneten Position. Unter der koordinatenbasiert errechneten Position ist eine vordefinierte Position in einem Koordinatensystem zu verstehen. In dieser Position kann mittels der Laserscaneinheit ein Abstand zwischen den beiden Bauteilen gemessen bzw. erfasst werden. Basierend auf diesem erfassten Abstand kann der Positions-Korrekturwert ermittelt werden. Anschließend kann auf dem bereitgestellten bzw. ermittelten Position-Korrekturwert das erste Bauteil in die vorgesehene Endposition überführt werden bzw. bewegt werden.

Der Vorteil des erfindungsgemäßen Verfahrens ist, dass das Verfahren flexibel an unterschiedliche Arten von Bauteilen bzw. Objekten angewandt werden kann. D.h. es ist möglich, ein Objekt unabhängig von der Position eines Referenzobjektes mit einem Roboter genau zu positionieren. Anders gesagt, sind keine statischen Offsetwerte mehr notwendig, die nur für jeweils eine spezifische Position gültig sind. Die ermittelten Positions-Korrekturwerte können in diesem Sinne als dynamische Offset-Werte bezeichnet werden. Folglich kann beispielsweise auf eine ortsfeste Positionierung eines Bauteils verzichtet werden. Des Weiteren ist durch das oben beschriebene Verfahren die Absolutgenauigkeit des Roboters in Bezug auf ein Referenzobjekt verbessert.

In einer Ausführungsform ist die zumindest eine Laserscaneinheit eine 2D-Linear-Laserscan-Einheit. Andere lasergestützte Scaneinheiten sind möglich.

In einer Ausführungsform ist wenigstens das zweite Bauteil in einer Haltevorrichtung angeordnet. Anders gesagt ist das zweite Bauteil in einer Haltevorrichtung fixiert. Dadurch kann das zweite Bauteil die Position während dem Verfahren nicht ändern, sodass nur das erste Bauteil bewegt wird.

In einer Ausführungsform umfasst das Roboterarmsystem zumindest einen zweiten Roboterarm, der eingerichtet ist, um das zweite Bauteil zu halten und zu bewegen. Dies ermöglicht es, das zweite Bauteil relativ zum ersten Bauteil zu bewegen und zu positionieren. Das ist besonders vorteilhaft, wenn die beiden Bauteile dazu vorgesehen sind, anschließend beispielsweise miteinander verbunden zu werden.

In einer Ausführungsform werden das erste und/oder zweite Bauteil jeweils durch den ersten und/oder zweiten Roboterarm basierend auf dem bereitgestellten Positions-Korrekturwert in eine Endposition bewegt.

In einer Ausführungsform umfasst das Roboterarmsystem zumindest einen dritten Roboterarm, der eingerichtet ist, um das erste und zweite Bauteil in der Endposition miteinander zu verbinden. Der Begriff "verbinden" ist hier breit zu verstehen. Das Verbinden kann beispielsweise Schweißen, Hartlöten, Kleben, Nieten oder andere hier nicht genannte Verbindungsarten umfassen.

So ist es möglich, dass in einer Ausführungsform das Verfahren weiterhin umfasst: Verschweißen des ersten und zweiten Bauteils in der Endposition durch den dritten Roboterarm. Das Verschweißen kann beispielsweise durch Punktschweißen oder Laserschweißen erfolgen. Andere Schweißverfahren können ebenfalls eingesetzt werden. Auch können im Roboterarmsystem mehr als zwei oder drei Roboterarme vorgesehen sein, die gleiche oder unterschiedliche Funktionen durchführen.

Unter dem ersten Bauteil und unter dem zweiten Bauteil sind dabei nicht zwingend immer die gleichen Bauteile zu verstehen. Beispielsweise ist es möglich, dass ein weiteres drittes Bauteil an den bereits miteinander verbundenen ersten und zweiten Bauteilen positioniert und mit diesen verbunden werden soll. In diesem Fall bilden die beiden bereits miteinander verbundenen Bauteile ein neues erstes Bauteil und das dritte Bauteil ein neues zweites Bauteil.

In einer Ausführungsform umfasst das System zumindest zwei Laserscaneinheiten. Dadurch kann der Scanprozess beschleunigt werden, da gleichzeitig mehrere Scans durchgeführt werden können. Die beiden Laserscaneinheiten können gemeinsam an einem Roboterarm angeordnet sein oder jeweils an einem separaten Roboterarm angeordnet sein. Es ist nicht ausgeschlossen, weitere zusätzliche Laserscaneinheiten zu verwenden.

In einer Ausführungsform sind die zumindest zwei Laserscaneinheiten starr zueinander angeordnet. Des Weiteren können die beiden Laserscaneinheiten linear, orthogonal oder radial zueinander angeordnet sein. Die Laserscaneinheiten sind jeweils nach ihrer angedachten Funktion angeordnet. Die Ausrichtung hängt vom zu scannenden Bauteil ab.

In einer Ausführungsform sind die zumindest zwei Laserscaneinheiten derart angeordnet, dass die emittierten Laserstrahlen in einem Winkel zueinander abgebbar sind. Dadurch kann eine größere Fläche durch die Laserstrahlen abgetastet werden. Der Winkel der Laserstrahlen ermöglicht es, zusammenlaufende Flächen mit jeweils einer Laserscaneinheit abzutasten. Diese abgetasteten Flächen können anschließend ausgewertet werden und eine Schnittgerade dieser Flächen kann gebildet werden. Dies wirkt sich wiederum positiv auf die Messgenauigkeit aus.

In einer Ausführungsform fassen die emittierten Laserstrahlen einen Winkel zwischen 80° und 25°, vorzugsweise einen Winkel zwischen 60° und 35° und besonders bevorzugt zwischen 50° und 40° ein. Es ist vorteilhaft, wenn der eingefasste Winkel der emittierten Laserstrahlen an das abzutastende Bauteil angepasst ist.

In einer Ausführungsform sind die zumindest zwei Laserscaneinheiten beweglich zueinander angeordnet. Bei beweglich zueinander angeordneten Laserscaneinheiten kann ein flexibler Einsatz des Roboterarmsystems ermöglicht werden. Beispielsweise kann das Roboterarmsystem in dieser Ausführungsform auch für größere oder komplexere Bauteile eingesetzt werden, ohne dass Umbaumaßnahmen zwingend vorzunehmen sind. Die beiden Laserscaneinheiten können beispielsweis dazu eingerichtet sein, um Linearbewegungen, Radialbewegungen oder sonstige Bewegungen zueinander auszuführen.

In einer Ausführungsform ist/sind die zumindest eine Laserscaneinheit oder die zumindest zwei Laserscaneinheiten, an einem Roboterarm angeordnet. Dadurch ist es möglich, die Laserscaneinheiten relativ zu den zu scannenden Bauteilen zu bewegen. So kann das Verfahren beschleunigt werden.

In einer Ausführungsform ist/sind die zumindest eine Laserscaneinheit oder die zumindest zwei Laserscaneinheiten an einer im Roboterarmsystem vorgesehenen beweglichen oder frei verfahrbaren Einheit angeordnet.

In einer Ausführungsform ist die Laserscaneinheit dazu eingerichtet, durch Abtasten zwei Ebenen zu ermitteln und deren (virtuelle) Schnittgerade zu berechnen. Dabei wird folgendermaßen vorgegangen. Zwei Ebenen werden mittels Laserabtastung zweier Flächen eines Bauteils ermittelt. Anschließend wird eine Schnittgerade der beiden Ebenen berechnet. Die Schnittgerade dieser Ebenen wird für die Abstandsmessung herangezogen. Bauteile weisen Ecken bzw. Kanten auf. Diese Bereiche umfassen in der Regel einen Radius (Eckradius). An diesen Radien werden die Laserstrahlen der Laserscaneinrichtungen unkontrolliert reflektiert, sodass keine genaue Messung möglich ist. Durch das Bestimmen der Ebenen und der Berechnung deren (virtueller) Schnittgerade wird dieses Problem vermieden und es ist eine genaue Messung des Abstandes möglich, und zwar auch bei Bauteilen mit Eckradien. Darüber hinaus besteht dadurch nicht die Notwendigkeit, die Bauteile möglichst einheitlich bereitzustellen, d.h. es können Bauteilte mit unterschiedlichen Eckradien verwendet werden und die korrespondierenden Toleranzen bei der Herstellung der Bauteilte können entsprechend größer sein.

In einer Ausführungsform sind die Bauteile Einzelelemente und/oder bereits verschweißte Elemente eines Stahlrahmens, insbesondere eines Stahlrahmens für ein Schalungselement. Alternativ sind andere Elemente denkbar, beispielsweise ein Karosserieelement, ein Gerüstelement oder dergleichen. Das Verfahren ist nicht auf die hier offenbarten Ausführungsformen beschränkt, sondern für verschiedene Industrieanwendungen geeignet. Somit ist es möglich, dass das Material und die Geometrie der Bauteile ja nach Anwendung variieren. Beispielsweise sind Metalle oder Kunststoffe sowie eckige oder andere Profile denkbar.

Ein weiterer Aspekt der Erfindung betrifft ein Roboterarmsystem zur Positionierung eines ersten Bauteils relativ zu einem zweiten Bauteil gemäß einem der vorhergehenden Ausführungsformen, umfassend:
zumindest ein erster Roboterarm, der eingerichtet ist, um ein erstes Bauteil zu halten und relativ zu einem zweiten Bauteil zu bewegen, wobei der Roboterarm weiterhin eingerichtet ist, koordinatenbasiert bewegt zu werden;
zumindest eine Laserscaneinheit, die eingerichtet ist, um einen Abstand zwischen dem ersten Bauteil und dem zweiten Bauteil zu erfassen.

Ein weiterer Aspekt der Erfindung betrifft ein Computerprogrammelement mit Anweisungen, die bei Ausführung auf Computergeräten einer Computerumgebung eingerichtet sind, um die Schritte des Verfahrens nach einem der vorhergehenden Ausführungsformen auszuführen.

Ein weiterer Aspekt der Erfindung betrifft eine Verwendung eines Roboterarms und/oder zumindest einer Laserscaneinheit in einem Verfahren nach einem der vorhergehenden Ausführungsformen.

Ein weiterer Aspekt der vorliegenden Erfindung betrifft ein Stahlrahmen, insbesondere Stahlrahmen für ein Schalungselement, hergestellt nach einem Verfahren nach einem der vorhergehenden Ausführungsformen

### Beschreibung der bevorzugten Ausführungsformen

Nachfolgend wird eine detaillierte Beschreibung der Figuren gegeben, darin zeigen:
- **Figur 1**: eine Ansicht von oben einer Anordnung zweier Laserscaneinheiten;
- **Figur 2**: eine perspektivische Ansicht zweier Laserscaneinheiten gemäß Figur 1;
- **Figur 3**: eine perspektivische Ansicht eines mit dem offenbarten Verfahren gefertigten Elements (Stahlrahmen);
- **Figur 4**: ein Flussdiagramm eines Ausführungsbeispiels des erfindungsgemäßen Verfahrens; und
- **Figur 5**: eine schematische Ansicht eines Ausführungsbeispiels eines Systems.

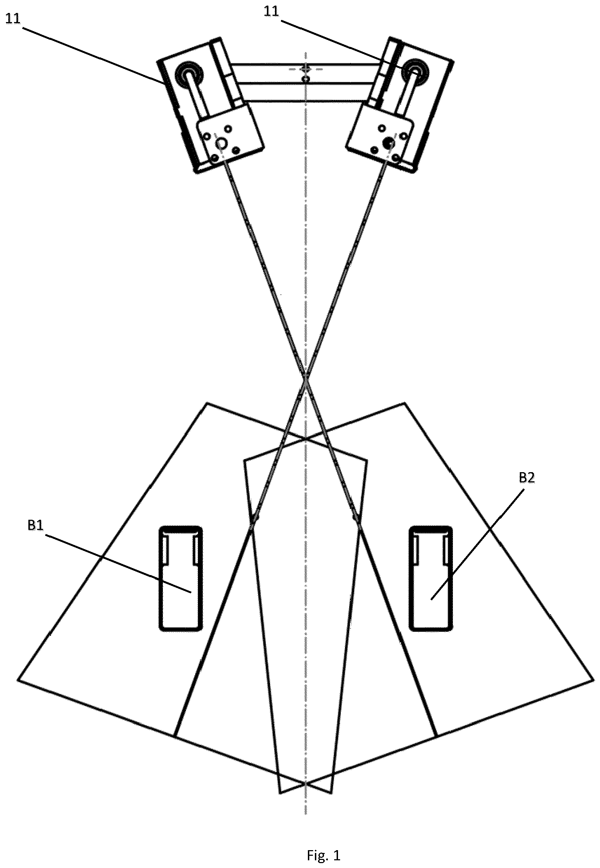

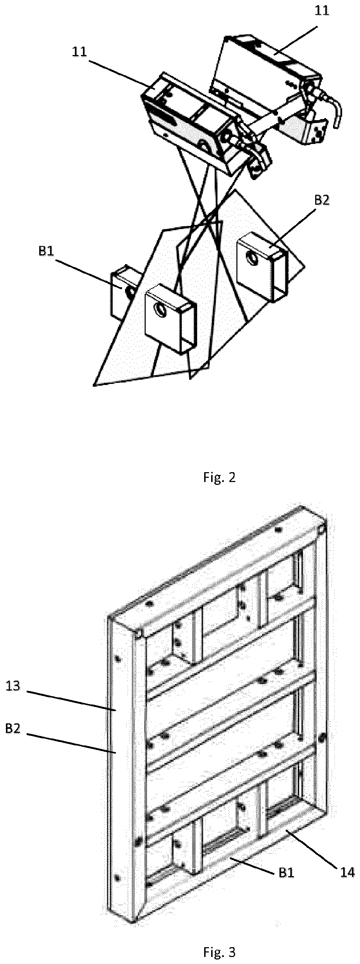

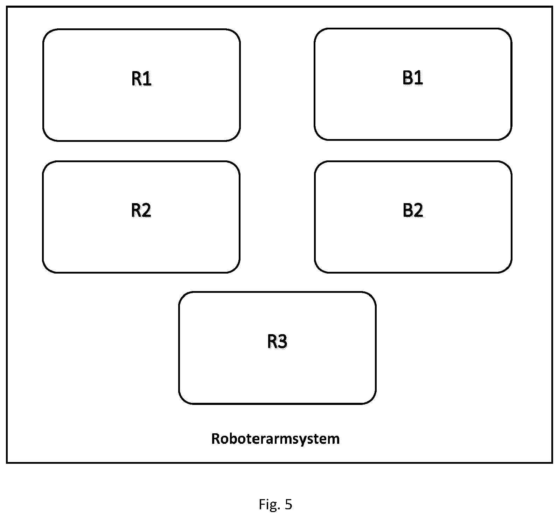

Figur 1 und Figur 2 zeigen jeweils eine Anordnung von zwei Laserscaneinheiten 11. Die Laserscaneinheiten 11 sind vorzugsweise an einem Roboterarm R1 (vgl. Figur 5) angeordnet bzw. befestigt. Die beiden Laserscaneinheiten 11 können starr oder beweglich zueinander angeordnet sein.

Die Laserscaneinheiten 11 sind jeweils auf ein erstes Bauteil B1 und ein zweites Bauteil B2 ausgerichtet. Genauer gesagt sind die Laserscaneinheiten 11 jeweils auf das schräg gegenüberliegend angeordnete erste oder zweite Bauteil B1, B2 ausgerichtet. Die beiden Bauteile B1, B2 sind jeweils als ein Hohlprofil ausgebildet. Andere Arten von Bauteilen oder Bauelementen sind möglich.

Die von den beiden Laserscaneinheiten 11 emittierten Laserstrahlen spannen jeweils einen Winkel auf. Die emittierten Laserstrahlen der beiden Laserscaneinheiten 11 können beispielsweise jeweils einen Winkel zwischen 80° und 25°, vorzugsweise einen Winkel zwischen 60° und 35° und besonders bevorzugt zwischen 50° und 40° aufspannen.

Der aufgespannte Winkel der emittierten Laserstrahlen ermöglicht es, jeweils zwei Flächen des ersten bzw. des zweiten Bauteils abzutasten. Die Laserscaneinheiten sind dazu eingerichtet, durch Abtasten zweier Ebenen eine Schnittgerade dieser beiden Ebenen zu ermitteln. Die Schnittgerade oder der Schnittpunkt dieser virtuellen Ebenen oder Geraden kann für die Abstandsmessung herangezogen werden. Die Laserscaneinheiten 11 können beispielsweise als 2D Laserscaneinheiten oder als 3D Laserscaneinheiten ausgebildet sein.

Bauteile bzw. Bauelemente weisen Ecken bzw. Kanten auf. Diese Bereiche umfassen in der Regel einen Radius (Eckradius). An diesen Radien werden die Laserstrahlen der Laserscaneinrichtungen 11 unkontrolliert reflektiert, sodass keine genaue Messung möglich ist. Durch das Bestimmen der Ebenen und der Berechnung der Schnittgerade wird dieses Problem vermieden, sodass eine genauere Messung des Abstands möglich ist, und somit auch eine genauere Nachpositionierung der Bauteile zueinander.

Figur 3 zeigt ein Bauteil, das mittels eines hier beschriebenen Verfahrens hergestellt wurde. Bei dem Bauteil handelt es sich um ein Schalungselement 12. Das Schalungselement 12 umfasst im hergestellten Zustand einen Rahmen sowie mehrere innere Streben. Der Rahmen umfasst Längselemente 13 und Querelemente 14. Beispielsweise kann ein Querelement 14 als erstes Bauteil B1 und ein Längselement 13 als zweites Bauteil B2 definiert werden.

Das zweite Bauteil B2 kann beispielsweise in einer Haltevorrichtung angeordnet sein. Alternativ ist es denkbar, dass das zweite Bauteil B2 von einem zweiten Roboterarm R2 gehalten wird. Anschließend können die beiden Bauteile B1 und B2 zueinander gemäß dem beschriebenen Verfahren positioniert werden. Anschließend können die beiden Bauteile B1 und B2 miteinander verbunden werden. Dazu kann in einer möglichen Ausführungsform ein dritter Roboterarm R3, an dem eine Schweißvorrichtung angeordnet ist, verwendet werden.

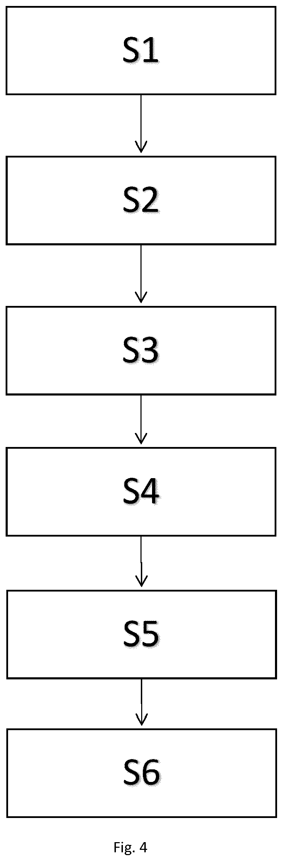

Figur 4 stellt schematisch ein Verfahren zur Positionierung eines ersten Bauteils B1 relativ zu einem zweiten Bauteil B2 durch ein Roboterarmsystem dar.

In einem ersten Schritt S1 wird zumindest ein erster Roboterarms R1 bereitgestellt, der eingerichtet ist, um das erstes Bauteil B1 zu halten und relativ zu dem zweiten Bauteil B2 zu bewegen. Dabei ist der Roboterarm R1 dazu eingerichtet, koordinatenbasiert bewegt zu werden.

In einem zweiten Schritt S2 will zumindest eine Laserscaneinheit 11 bereitgestellt, die eingerichtet ist, um einen Abstand zwischen dem ersten Bauteil B1 und dem zweiten Bauteil B2 zu erfassen.

In einem dritten Schritt S3 wird das 1. Bauteil B1 durch den ersten Roboterarm R1 aufgenommen und relativ zum zweiten Bauteil B2 gemäß einer koordinatenbasiert errechneten Position bewegt.

In einem vierten Schritt S4 wird ein Abstand des ersten Bauteils B1 in seiner koordinatenbasiert errechneten Position zum zweiten Bauteil B2 durch die Laserscaneinheit 11 erfasst.

In einem fünften Schritt S5 wird ein Positions-Korrekturwerts basierend auf dem erfassten Abstand des ersten Bauteils B1 zum zweiten Bauteil B2 bereitgestellt.

In einem sechsten Schritt S6 wird wenigstens eines der Bauteile B1, B2 basierend auf dem bereitgestellten Positions-Korrekturwert in eine Endposition bewegt.

Figur 5 zeigt eine mögliche Darstellung eines Roboterarmsystems. Das Roboterarm System umfasst den ersten Roboterarm R1, den zweiten Roboterarm R2 und den dritten Roboterarm R3. Die Roboterarme R1 und R2 sind dazu vorgesehen, das erste Bauteil B1 und das zweite Bauteil B2 aufzunehmen und zu positionieren. Der dritte Roboterarm ist dazu vorgesehen das erste Bauteil B1 mit dem zweiten Bauteil B2 zu verbinden. Dazu kann der dritte Roboterarm beispielsweise eine Schweißvorrichtung umfassen.

Die vorliegende Erfindung ist dabei allerdings nicht auf die vorhergehenden bevorzugten Ausführungsbeispiele beschränkt, solange sie vom Gegenstand der Ansprüche umfasst ist. Ergänzend wird darauf hingewiesen, dass die Begriffe "umfassend" und "aufweisend" keine anderen Elemente oder Schritte ausschließen und die unbestimmten Artikel "eine" oder "ein" keine Vielzahl ausschließen. Darüber hinaus wird darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszeichenliste

- 11: Laserscaneinheit
- 12: Schalungselement
- 13: Längselemente
- 14: Querelement
- R1: erster Roboterarm
- R2: zweiter Roboterarm
- R3: dritter Roboterarm
- B1: erstes Bauteil
- B2: zweites Bauteil

## Patentansprüche

1. Verfahren zur Positionierung eines ersten Bauteils (B1) relativ zu einem zweiten Bauteil (B2) durch ein Roboterarmsystem, umfassend:
Bereitstellen zumindest eines ersten Roboterarms (R1), der eingerichtet ist, um ein erstes Bauteil (B1) zu halten und relativ zu einem zweiten Bauteil (B2) zu bewegen, wobei der Roboterarm (R1) weiterhin eingerichtet ist, koordinatenbasiert bewegt zu werden;
Bereitstellen zumindest einer Laserscaneinheit (11), die eingerichtet ist, um einen Abstand zwischen dem ersten Bauteil (B1) und dem zweiten Bauteil (B2) zu erfassen;
Aufnehmen des ersten Bauteils (B1) durch den ersten Roboterarm (R1) und bewegen des ersten Bauteils (B1) relativ zum zweiten Bauteil (B2) gemäß einer koordinatenbasiert errechneten Position;
Erfassen eines Abstandes des ersten Bauteils (B1) in seiner koordinatenbasiert errechneten Position zum zweiten Bauteil (B2) durch die Laserscaneinheit (11);
Bereitstellen eines Positions-Korrekturwerts basierend auf dem erfassten Abstand des ersten Bauteils (B1) zum zweiten Bauteil (B2);
Bewegen wenigstens eines der Bauteile (B1, B2) basierend auf dem bereitgestellten Positions-Korrekturwert in eine Endposition.

2. Verfahren nach Anspruch 1, wobei wenigstens das zweite Bauteil (B2) in einer Haltevorrichtung angeordnet ist.

3. Verfahren nach Anspruch 1 oder Anspruch 2, wobei das Roboterarmsystem zumindest einen zweiten Roboterarm (R2) umfasst, der eingerichtet ist, um das zweite Bauteil (B2) zu halten und zu bewegen.

4. Verfahren nach einem der vorhergehenden Ansprüche, wobei das erste und/oder zweite Bauteil (B1, B2) jeweils durch den ersten und/oder zweiten Roboterarm (R1, R1) basierend auf dem bereitgestellten Positions-Korrekturwert in eine Endposition bewegt werden.

5. Verfahren nach einem der vorhergehenden Ansprüche, wobei das Roboterarmsystem zumindest einen dritten Roboterarm (R3) umfasst, der eingerichtet ist, um das erste und zweite Bauteil (B1, B2) in der Endposition miteinander zu verbinden.

6. Verfahren nach einem der vorhergehenden Ansprüche, wobei das System zumindest zwei Laserscaneinheiten (11) umfasst.

7. Verfahren nach Anspruch 6, wobei die zumindest zwei Laserscaneinheiten starr zueinander angeordnet sind.

8. Verfahren nach Anspruch 6 oder Anspruch 7, wobei die zumindest zwei Laserscaneinheiten (11) derart angeordnet sind, dass die emittierten Laserstrahlen in einem Winkel zueinander abgebbar sind.

9. Verfahren nach Anspruch 8, wobei die emittierten Laserstrahlen einen Winkel zwischen 80° und 25°, vorzugsweise einen Winkel zwischen 60° und 35° und besonders bevorzugt zwischen 50° und 40° einfassen.

10. Verfahren nach einem der Ansprüche 1 bis 6, wobei die zumindest zwei Laserscaneinheiten (11) beweglich zueinander angeordnet sind.

11. Verfahren nach einem der Ansprüche 6 bis 10, wobei die Laserscaneinheit (11) dazu eingerichtet ist, durch Abtasten zwei Ebenen zu ermitteln und deren Schnittgerade zu berechnen.

12. Roboterarmsystem zur Positionierung eines ersten Bauteils (B1) relativ zu einem zweiten Bauteil (B2) gemäß einem der vorhergehenden Ansprüche umfassend:
zumindest ein erster Roboterarm (R1), der eingerichtet ist, um das erstes Bauteil (B1) zu halten und relativ zu dem zweiten Bauteil (B2) zu bewegen, wobei der Roboterarm (R1) weiterhin eingerichtet ist, koordinatenbasiert bewegt zu werden;
zumindest eine Laserscaneinheit (11), die eingerichtet ist, um einen Abstand zwischen dem ersten Bauteil (B1) und dem zweiten Bauteil (B2) zu erfassen.

13. Computerprogrammelement mit Anweisungen, die bei Ausführung auf Computergeräten einer Computerumgebung eingerichtet sind, um die Schritte des Verfahrens nach einem der Ansprüche 1 bis 11 in einem System nach Anspruch 12 auszuführen.

14. Verwendung eines Roboterarms und/oder zumindest eine Laserscaneinheit (11) in einem Verfahren nach einem der Ansprüche 1 bis 11 und/oder in einem System nach Anspruch 12.

15. Stahlrahmen, insbesondere Stahlrahmen für ein Schalungselement, hergestellt nach einem Verfahren nach einem der Ansprüche 1 bis 11.
